(19) Europäisches Patentamt
European Patent Office
Office européen des brevets

(11) **EP 4 407 900 A1**

(12) **EUROPEAN PATENT APPLICATION**
published in accordance with Art. 153(4) EPC

(43) Date of publication:
**31.07.2024 Bulletin 2024/31**

(21) Application number: **22871927.4**

(22) Date of filing: **19.09.2022**

(51) International Patent Classification (IPC):
***H04J 3/06*** ^(2006.01)

(52) Cooperative Patent Classification (CPC):
**H04J 3/0667**

(86) International application number:
**PCT/CN2022/119691**

(87) International publication number:
**WO 2023/045881 (30.03.2023 Gazette 2023/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.09.2021 CN 202111115390**

(71) Applicant: **Beijing CHJ Information Technology
Co., Ltd.
Beijing 101399 (CN)**

(72) Inventors:
• **LIU, Jiafu
Beijing 101399 (CN)**
• **XU, Yingchun
Beijing 101399 (CN)**
• **GAO, Zhengyang
Beijing 101399 (CN)**
• **YANG, Shaodong
Beijing 101399 (CN)**

(74) Representative: **advotec.
Patent- und Rechtsanwaltspartnerschaft
Tappe mbB
Widenmayerstraße 4
80538 München (DE)**

(54) **TIME SYNCHRONIZATION APPARATUS, SYSTEM, AND METHOD**

(57)     Disclosed are a time synchronization apparatus, a system, and a method. The time synchronization apparatus comprises a packet receiving and processing module and a synchronization time determination module, an output end of the packet receiving and processing module being connected to an input end of the synchronization time determination module. The packet receiving and processing module is used to receive a PTP packet sent by a prior node, and determine a target parameter on the basis of the PTP packet, the target parameter being a time-related parameter used to represent a time difference between a current node and a primary node. The synchronization time determination module is used to determine a synchronization time of the current node on the basis of the target parameter.

FIG. 1

**Description**

**CROSS-REFERENCE TO RELATED APPLICATION**

This application is based on and claims priority to Chinese Patent Application No. 202111115390.3, filed on September 23, 2021, the entire content of which is incorporated herein for the reference.

**TECHNICAL FIELD**

The disclosure relates to the field of computer network technologies, and specifically to an apparatus, a system, and a method for time synchronization.

**BACKGROUND**

Presently, the conventional solution for achieving time synchronization in the 802.1AS standard in the time sensitive networking (TSN) protocol specification is to receive an event message (such as Pdelay_Req, Pdelay_Resp, or Sync) by a medium access control layer, mark the event message with a timestamp, and send the timestamp to an advanced reduced instruction-set computer (RISC) machine (ARM) platform. Linux™ or Standalone™ may be adopted on the ARM platform™ and a C or C++ development environment may be used, to calculate parameters such as the link delay, the frequency deviation, and the residence time. However, in the solution, the startup time of the system is long, the implementation cost of the system is high, and the jitter occurs in the transmission process of the event message.

**SUMMARY**

An apparatus, a system, and a method for time synchronization are provided according to embodiments of the disclosure.

An apparatus for time synchronization is provided according to embodiments of the disclosure. The apparatus is configured in a current node. The apparatus includes a message receiving-processing module and a synchronous time determining module. An output end of the message receiving-processing module is connected to an input end of the synchronous time determining module.

The message receiving-processing module is configured to receive a precision time protocol (PTP) message from a previous node and determine a target parameter according to the PTP message, and the target parameter is a relevant time parameter for representing a time difference between the current node and a master node.

The synchronous time determining module is configured to determine a synchronous time of the current node according to the target parameter.

According to some embodiments, the message receiving-processing module includes a message preprocessing unit. The message preprocessing unit is configured to receive the PTP message from the previous node and perform a clock domain conversion on the PTP message.

According to some embodiments, the message receiving-processing module further includes a message parsing unit. An input end of the message parsing unit is connected to an output end of the message preprocessing unit.

The message parsing unit is configured to obtain a key parameter of the PTP message by parsing the PTP message after the clock domain conversion. The key parameter of the PTP message is a time parameter carried by the PTP message.

According to some embodiments, the message parsing unit is configured to obtain the key parameter of the PTP message by parsing the PTP message after the clock domain conversion, by performing:

obtaining a PTP message descriptor;
determining a message type according to the PTP message descriptor; and
extracting the key parameter of the PTP message corresponding to the message type from the PTP message.

According to some embodiments, the message receiving-processing module further includes a target parameter determining unit. An input end of the target parameter determining unit is connected to an output end of the message parsing unit.

The target parameter determining unit is configured to determine the target parameter according to the key parameter of the PTP message.

According to some embodiments, the target parameter determining unit is specifically configured to:

extract a target timestamp related to the target parameter from the key parameter of the PTP message; and

determine the target parameter according to the target timestamp.

According to some embodiments, the key parameter of the PTP message includes a synchronization message sending timestamp, a synchronization message receiving timestamp, a synchronization follow-up message time parameter, a point delay request message sending timestamp, a point delay request message receiving timestamp, a point delay response message sending timestamp, and a point delay response message receiving timestamp; and the target parameter includes a correction time of the previous node, a point delay request sending time of the current node, a point delay request receiving time of the previous node, a point delay response sending time of the previous node, and a point delay response receiving time of the current node.

According to some embodiments, the synchronous time determining module is configured to:

determine a correction time of the previous node according to the target parameter, a preset correction time, and a preset frequency deviation ratio, in which the correction time of the previous node is a duration of transmission and residence in a network link when a synchronization message is sent by the master node and is forwarded by the previous node;

determine a link transmission delay between the previous node and the current node and a frequency deviation ratio of the current node according to the target parameter and the preset frequency deviation ratio, in which the frequency deviation ratio of the current node is a ratio between a clock frequency of the current node and a clock frequency of the master node; and

determine the synchronous time according to a precise time of the master node, the correction time of the previous node, the link transmission delay, and the frequency deviation ratio of the current node.

According to some embodiments, the apparatus for time synchronization is configured by a programmable logic device (PLD).

A system for time synchronization is provided according to embodiments of the disclosure. The system includes a master node, at least one slave node, and the apparatus for time synchronization according to any one of embodiments of the disclosure. The apparatus for time synchronization is configured in the slave node.

A method for time synchronization is provided according to embodiments of the disclosure. The method is performed by the apparatus for time synchronization according to any one of embodiments of the disclosure. The method includes:

receiving a PTP message from a previous node and determining a target parameter according to the PTP message, in which the target parameter is a relevant time parameter for representing a time difference between a current node and a master node; and

determining a synchronous time of the current node according to the target parameter.

According to some embodiments, determining the target parameter according to the key parameter of the PTP message includes:

receiving the PTP message from the previous node and performing a clock domain conversion on the PTP message;

obtaining a key parameter of the PTP message by parsing the PTP message after the clock domain conversion, in which the key parameter of the PTP message is a time parameter carried by the PTP message; and

determining the target parameter according to the key parameter of the PTP message.

According to some embodiments, obtaining the key parameter of the PTP message by parsing the PTP message after the clock domain conversion includes:

obtaining a PTP message descriptor;

determining a message type according to the PTP message descriptor; and

extracting the key parameter of the PTP message corresponding to the message type from the PTP message.

According to some embodiments, determining the target parameter according to the key parameter of the PTP message specifically includes:

extracting a target timestamp related to the target parameter from the key parameter of the PTP message; and

determining the target parameter according to the target timestamp.

According to some embodiments, the key parameter of the PTP message includes a synchronization message sending timestamp, a synchronization message receiving timestamp, a synchronization follow-up message time parameter, a point delay request message sending timestamp, a point delay request message receiving timestamp, a point delay response message sending timestamp, and a point delay response message receiving timestamp; and the target parameter includes a point delay request sending time of the current node, a point delay request receiving time of the previous node, a point delay response sending time of the previous node, and a point delay response receiving time of the current node.

According to some embodiments, determining the synchronous time of the current node according to the target parameter includes:

determining a correction time of the previous node according to the target parameter, a preset correction time, and a preset frequency deviation ratio, in which the correction time of the previous node is a duration of transmission and residence in a network link when a synchronization message is sent by the master node and is forwarded by the previous node;

determining a link transmission delay between the previous node and the current node and a frequency deviation ratio of the current node according to the target parameter and the preset frequency deviation ratio, in which the frequency deviation ratio of the current node is a ratio between a clock frequency of the current node and a clock frequency of the master node; and

determining the synchronous time according to a precise time of the master node, the correction time of the previous node, the link transmission delay, and the frequency deviation ratio of the current node.

An electronic device is further provided according to embodiments of the disclosure. The electronic device includes at least one processor; and a memory communicatively connected to the at least one processor; the memory is configured to store instructions executable by at least one processor, and when the instructions are executed by least one processor, at least one processor is caused to perform the method for time synchronization according to the above any one embodiment.

A non-transitory computer-readable storage medium stored with computer instructions is provided according to embodiments of the disclosure. The computer instructions are configured to cause a computer to perform the method for time synchronization according to any one of the above embodiments.

A computer program product including a computer program is provided according to embodiments of the disclosure. The computer program is configured to perform the method for time synchronization according to any one of the above embodiments when performed by a processor.

A computer program including a computer program code is provided according to embodiments of the disclosure. When the computer program code is running on a computer, the computer is caused to perform the method for time synchronization according to any one of the above embodiments.

The technical solutions according to embodiments of the disclosure have the following beneficial effects compared with the related art.

In the technical solutions according to embodiments of the disclosure, the PTP message from the previous node is received, the target parameter is determined according to the PTP message, and the synchronous time of the current node is determined according to the target parameter. All are implemented by adopting hardware function modules at the PLD side, that is, an entire process of time synchronization adopts "hard implementation", which reduces the startup time of the Linux™ system or the Standalone™ system, so that the startup time of the entire system is reduced, the participation of the ARM platform™ is avoided, and the implementation cost of the entire system is reduced. At the same time, the event message may be sent strictly according to a clock cycle of the PLD itself, so as to ensure the determinacy of the transmission time of the event message and avoid the jitter in the transmission of the event message.

## BRIEF DESCRIPTION OF THE DRAWINGS

The drawings herein are incorporated into the specification and constitute a part of the specification, show embodiments in conformity with the disclosure, and explain the principle of the disclosure together with the specification.

In order to explain the technical solutions according to embodiments of the disclosure or according to the related art more clearly, the drawings described according to the embodiments or the related art will be briefly introduced below. Obviously, those skilled in the art may obtain other drawings based on the drawings without any creative work.

FIG. 1 is a block diagram illustrating a structure of an apparatus for time synchronization according to embodiments of the disclosure;
FIG. 2 is a detail block diagram illustrating a structure of an apparatus for time synchronization according to embodiments of the disclosure;
FIG. 3 is a diagram illustrating a structure of a message preprocessing unit according to embodiments of the disclosure;

FIG. 4 is a diagram illustrating a logic implementation of a message parsing unit according to embodiments of the disclosure;

FIG. 5 is a diagram illustrating a structure of a target parameter determining unit according to embodiments of the disclosure;

FIG. 6 is a diagram illustrating a transmission process of a PTP message according to embodiments of the disclosure;

FIG. 7 is a block diagram illustrating a structure of another apparatus for time synchronization according to embodiments of the disclosure; and

FIG. 8 is a flowchart illustrating a method for time synchronization according to embodiments of the disclosure.

## DETAILED DESCRIPTION

To understand the above purposes, features, and advantages of the disclosure more clearly, embodiments of the disclosure may be further described below. It should be noted that, embodiments of the disclosure may be combined with features in the embodiments without conflict.

Numerous specific details are set forth in the following description to facilitate a thorough understanding of the disclosure. However, the disclosure may also be implemented in different ways other than those described herein; obviously, embodiments in the specification are only a part of embodiments of the disclosure rather than all embodiments.

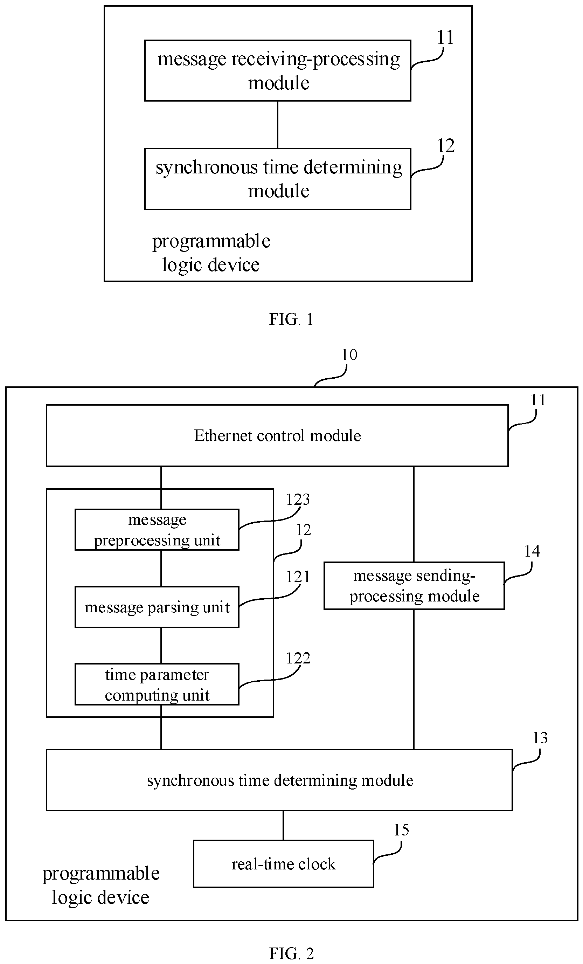

FIG. 1 is a block diagram illustrating a structure of an apparatus for time synchronization according to embodiments of the disclosure. The apparatus for time synchronization may be configured to implement the time synchronization in the TSN 802.1AS and may be configured in a slave node in a vehicle communication network, thereby achieving the time synchronization between the slave node and a master node. The apparatus for time synchronization according to embodiments of the disclosure is configured in a programmable logic device (PLD), that is, modules in the apparatus for time synchronization may be implemented by hardware function modules in the PLD. As shown in FIG. 1, the apparatus for time synchronization includes a message receiving-processing module 11 and a synchronous time determining module 12. An output end of the message receiving-processing module 11 is connected to an input end of the synchronous time determining module 12.

The message receiving-processing module 11 is configured to receive a precision time protocol (PTP) message from a previous node and determine a target parameter according to the PTP message. The target parameter is a relevant time parameter for representing a time difference between the current node and a master node.

The synchronous time determining module 12 is configured to determine a synchronous time of the current node according to the target parameter.

The apparatus for time synchronization according to embodiments of the disclosure is applied in a node in a PTP domain, that is, a clock node, for example, a switch supporting a PTP protocol. The node device in the PTP domain performs a clock synchronization according to a certain master-slave relationship. The node device that synchronizes a clock is called a slave node and the node device that publishes the clock is called a master node. The master-slave relationship is relative. One node device may synchronize the clock from an upper node device and publish the clock to a lower node device simultaneously. According to embodiments of the disclosure, clock information is transmitted via the PTP message. The clock node according to embodiments of the disclosure may be a boundary clock, that is, a clock with two or more PTP communication ports. The two or more PTP communication ports include a master port that publishes the synchronous time and a slave port that receives the synchronous time. According to embodiments of the disclosure, when the current node is a slave node directly connected to the master node, the previous node is the master node; and when the current node is a slave node not directly connected to the master node, the previous node is the slave node.

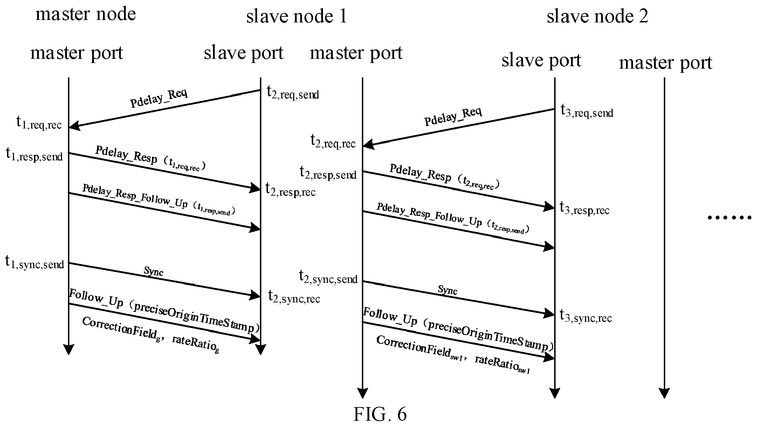

In addition, the PTP message includes an event message and a general message. The event message is a time-concept message marked with a precise timestamp when entering and leaving a device port, and may include a synchronization message (Sync), a delay request message (Delay_Req), a point delay request message (Pdelay_Req), a point delay response message (Pdelay_Resp), and the like. The general message is a non-time-concept message that will not generate a timestamp when sent to or output from a device port. The general message is configured to establish a master-slave relationship, and request and announce time information. The general message includes an announcement message (Announce), a follow-up message (Follow_Up), a delay response message (Delay_Resp), a point delay response follow-up message (Pdelay_Resp_Follow_Up), a management message (Management), a signal message (Signaling), and the like. In the above PTP message, the Sync is used to synchronize a message and sent from the master node to the slave node and may include a timestamp when the Sync is sent, and the timestamp may be included in a subsequent Follow_Up. The Delay_Req is used to request an opposite point to return a timestamp when the Delay_Req is received, and the timestamp is embedded in the Delay_Resp. The Pdelay_Req is used to initiate a measurement request of a link delay, including a timestamp when the Pdelay_Req is sent. The Pdelay_Resp is used to respond to the Pdelay_Req, and may include a timestamp when the Pdelay_Resp is sent, and the timestamp may be included in a subsequent Pdelay_Resp_Follow_Up. The Announce is used to broadcast state and feature information of a sending node and an advanced master clock. The Follow_Up is used to send a timestamp when the Sync is sent. The Pdelay_Resp_Follow_Up is used to send a timestamp when the Pdelay_Resp is sent. The Management is used to send information and a command for managing a clock device. The Signaling is used to send information, a request, and a command among different clocks. According to embodiments of the disclosure, the PTP message may include Sync, Follow_Up, Pdelay_Req, Pdelay_Resp, and Pdelay_Resp_Follow_Up. For example, the previous node sends the Sync to the current node (when the previous node is a slave node, the previous node forwards the Sync from the master node to the current node), and when receiving the Sync, the current node obtains a timestamp when the Sync is received. When the Sync does not include a timestamp when the previous node sends the Sync, the previous node continues to send the Follow_Up to the current node, and when receiving the Follow_Up, the current node obtains a timestamp when the previous node sends the Sync from the Follow_Up. The current node sends the Pdelay_Req to the previous node, and obtains a timestamp when the Pdelay_Req is sent simultaneously. The previous node sends the Pdelay_Resp to the current node when receiving the Pdelay_Req, and when receiving the Pdelay_Resp, the current node obtains a timestamp when the Pdelay_Resp is received, and obtains a timestamp when the previous node receives the Pdelay_Req from the Pdelay_Resp. When the Pdelay_Resp does not include the timestamp when the previous node sends the Pdelay_Resp, the previous node continues to send the Pdelay_Resp_Follow_Up to the current node, and when receiving the Pdelay_Resp_Follow_Up, the current node obtains the timestamp when the previous node sends the Pdelay_Resp from the Pdelay_Resp_Follow_Up (Refer to FIG. 6).

In the above solutions, the PLD may be a field programmable gate array (FPGA). In addition, the PLD may further include an Ethernet control module. The Ethernet control module may be an Ethernet controller, an input end of the Ethernet control module is connected to an Ethernet transceiver (Phy), and the Ethernet control module is configured to receive and send the PTP message and add a hardware timestamp on the event message in the PTP message.

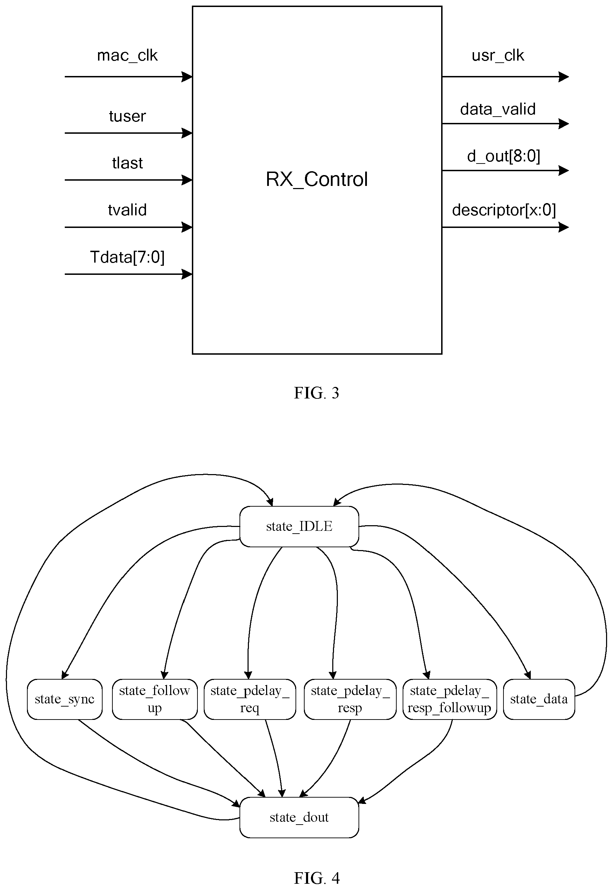

Based on the above technical solutions, according to some embodiments, referring to FIG. 2, the message receiving-processing module 11 includes a message preprocessing unit 113. An input end of the message preprocessing unit 113 is connected to an output end of the Ethernet control module 10. The message preprocessing unit 113 is configured to receive the PTP message from the previous node and perform a clock domain conversion on the PTP message. Considering different processing logics of the PLD for different bandwidth interfaces, when the bandwidth interface is replaced, the processing logic of the PLD need to be adjusted. Therefore, in the disclosure, the message preprocessing unit 113 performs the clock domain conversion on the PTP message, so that when the bandwidth interface is replaced, the processing logic of the PLD remains unchanged. As shown in FIG. 3, the message preprocessing unit RX_Control performs the clock domain conversion on the PTP message, that is, mac_clk is converted to usr_clk. The mac_clk represents a clock at a media access control (MAC) sublayer protocol end, and the usr_clk represents a clock at a user side. At the same time, the message preprocessing unit RX_Control may further expand a bit width of received message data. For example, 8-bit wide data is expanded to 9-bit wide data, that is, a bit width expansion is performed on 8-bit wide data tdata[7:0] to obtain 9-bit wide data d_out[8:0]. One bit of data is added to a high bit to indicate start and end of a frame. In addition, in the message preprocessing unit RX Control shown in FIG. 3, tuser indicates whether each frame of received message data is an abnormal frame, tlast indicates an end flag bit of the frame, tvalid indicates whether each byte in each frame is valid, data_valid indicates validity of output message data, and descriptor[x:0] indicates a PTP message descriptor with a bit width of x+1 for indicating a message type.

According to some embodiments, referring to FIG. 2, the message receiving-processing module 11 further includes a message parsing unit 111. An input end of the message parsing unit 111 is connected to an output end of the message preprocessing unit 113. The message parsing unit 111 is configured to obtain a key parameter of the PTP message by parsing the PTP message after the clock domain conversion. The key parameter of the PTP message is a time parameter carried by the PTP message.

According to some embodiments, the message parsing unit 111 is specifically configured to, obtain a PTP message descriptor; determine a message type according to the PTP message descriptor; and extract the key parameter of the PTP message corresponding to the message type from the PTP message. According to some embodiments, the key parameter of the PTP message includes a synchronization message sending timestamp, a synchronization message receiving timestamp, a synchronization follow-up message time parameter, a point delay request message sending timestamp, a point delay request message receiving timestamp, a point delay response message sending timestamp, and a point delay response message receiving timestamp. In detail, the message parsing unit 111 may be implemented by a design of a state machine. As shown in FIG. 4, when the PTP message descriptor is sync, it is determined that the message type is Sync. An initial state state_IDLE is skipped to a state state_sync, and the key parameter of the PTP message corresponding to the Sync is obtained, for example, a timestamp when the previous node sends the Sync, that is, a synchronization message sending timestamp, and a time stamp when the current node receives the Sync, that is, a synchronization message receiving timestamp. Then, the state_sync is skipped to a state_dout, the key parameter of the PTP message corresponding to the Sync is output, and the initial State state_IDLE is returned. When the PTP message descriptor is followup, it is determined that the message type is Follow_Up. The initial state state_IDLE is skipped to the state state_followup, and the key parameter of the PTP message corresponding to Follow_Up is obtained, for example, the synchronization follow-up message time parameter, which specifically includes a precise time Origin-TimeStamp of the master node, a preset correction time $CorrectionField_g$, and a preset frequency deviation ratio $rateRatio_g$. Then, the state is skipped to a state state_dout, the key parameter of the PTP message corresponding to Follow_Up is output, and the initial state state_IDLE is returned. When the PTP message descriptor is pdelay_req, it is determined that the message type is Pdelay_Req. The initial state state_IDLE is skipped to the state state_pdelay_req, and the key parameter of the PTP message corresponding to Pdelay_Req is obtained, for example, the timestamp when the current node sends Pdelay_Req, that is, a point delay request message sending timestamp. Then, the state is skipped to the state state_dout, the key parameter of the PTP message corresponding to Pdelay_Req is output, and the initial state state_IDLE is returned. When the PTP message descriptor is pdelay_resp, it is determined the message type is Pdelay_Resp, and the initial state state_IDLE is skipped to State pdelay_resp, and the key parameter of the PTP message corresponding to Pdelay_Resp is output, for example, the timestamp when the previous node receives Pdelay_Req, that is, a point delay request message receiving timestamp, and the timestamp when the current node receives Pdelay_Resp, that is, a point delay response message receiving timestamp. Then the state is skipped to the state state _dout, the key parameter of the PTP message corresponding to Pdelay_Resp is output, and the initial state state_IDLE is returned. When the PTP message descriptor is pdelay_resp_followup, it is determined that the message type is Pdelay_Resp_Follow_Up. The initial state state_IDLE is skipped to a state state_pdelay_resp_followup, and the key parameter of the PTP message corresponding to Pdelay_Resp_Follow_Up is obtained, for example, the timestamp when the previous node sends the Pdelay_Resp in response to the Pdelay_Req, that is, a point delay response message sending timestamp. Then, the state is skipped to the state state_dout, and the key parameter of the PTP message corresponding to Pdelay_Resp_Follow_Up is obtained, and the initial state state_IDLE is returned. When the PTP message descriptor is send_data, the initial state state_IDLE is skipped to the state state_data, and the initial state state_IDLE is directly returned. Based on the design of the above state machine, the parsing of the PTP message is achieved, and the key parameter of the PTP message such as each time stamp is extracted.

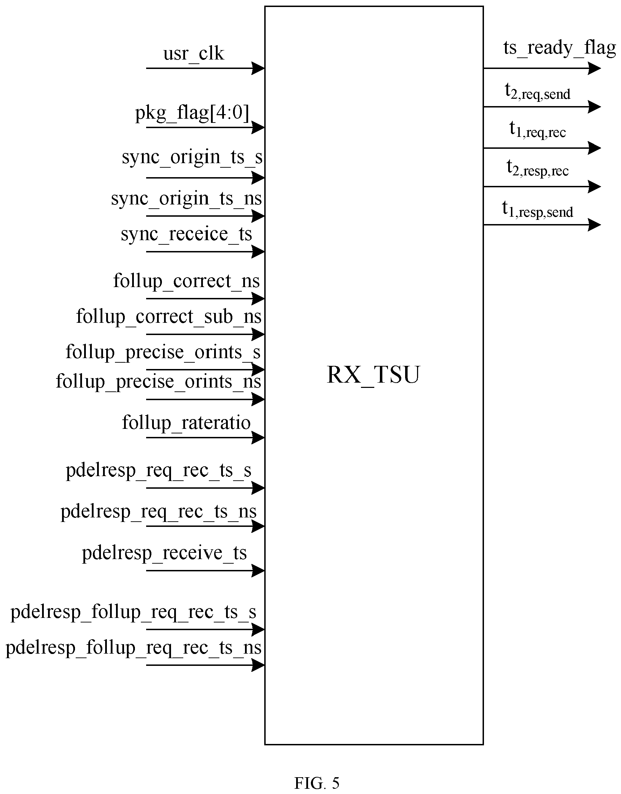

According to some embodiments, continuing to refer to FIG. 2, the message receiving-processing module 11 further includes a target parameter determining unit 112. An input end of the target parameter determining unit 112 is connected to an output end of the message parsing unit 111. The target parameter determining unit 112 is configured to determine the target parameter according to the key parameter of the PTP message. According to some embodiments, the target parameter includes a point delay request sending time of the current node, a point delay request receiving time of the previous node, a point delay response sending time of the previous node, and a point delay response receiving time of the current node. FIG. 5 is a diagram illustrating a structure of a target parameter determining unit. As shown in FIG. 5, the key parameter of the PTP message is input into the target parameter determining unit RX_TSU, and the target parameter determining unit RX_TSU extracts a target timestamp related to the target parameter from the key parameter of the PTP message, and determines the target parameter according to the target timestamp. In detail, the target timestamp includes a point delay request message sending timestamp, a point delay request message receiving timestamp, a point delay response message sending timestamp, and a point delay response message receiving timestamp. The target parameter determining unit RX_TSU outputs a point delay request message sending time $t_{2,req,send}$ of the current node, a point delay request message receiving time $t_{1,req,rec}$ of the previous node, a point delay response message sending time $t_{1,resp,send}$ of the previous node, and a point delay response message receiving time $t_{2,resp,rec}$ of the current node, and outputs a valid identifier ts_ready_flag. The valid identifier ts_ready_flag indicates whether the point delay request message sending time $t_{2,req,send}$ of the current node, the point delay request message receiving time $t_{1,req,rec}$ of the previous node, the point delay response message sending time $t_{1,resp,send}$ of the previous node, and the point delay response message receiving time $t_{2,resp,rec}$ of the current node are valid. For example, when the valid identifier ts_ready_flag is 1, it indicates valid, and when the valid identifier ts_ready_flag is 0, it indicates invalid.

According to some embodiments, continuing to refer to FIG. 2, the PLD may further include a message sending-processing module 13. An input end of the message sending-processing module 13 is connected to an output end of the synchronous time determining module 12. An output end of the message sending-processing module 13 is connected to an input end of the Ethernet control module 10. After the synchronous time determining module 12 determines the synchronous time, the message sending-processing module 13 sends a PTP message to a secondary slave node (a latter node), so that the time synchronization is performed on the latter node and the master node. In addition, the PLD may further include a real-time clock 14. The real-time clock 14 is configured to update a local clock periodically to achieve the time synchronization.

According to some embodiments, the synchronous time determining module is configured to, determine a correction time of the previous node according to the target parameter, a preset correction time, and a preset frequency deviation ratio, in which the correction time of the previous node is a duration of transmission and residence in a network link when a synchronization message is sent by the master node and the synchronization message is forwarded by the previous node; determine a link transmission delay between the previous node and the current node and a frequency deviation ratio of the current node according to the target parameter and the preset frequency deviation ratio, in which the frequency deviation ratio of the current node is a ratio between a clock frequency of the current node and a clock frequency of the master node; and determine the synchronous time according to a precise time of the master node, the correction time of the previous node, the link transmission delay, and the frequency deviation ratio of the current node.

In detail, referring to FIG. 6, the synchronous time is calculated based on the following equation:

$$GlobalTime(t) = preciseOriginTimeStamp + CorrectionField_{sw(i-1)}$$
$$+ Pdelay_{swi} + RateRatio_{swi} * \left(t - t_{i,sync,rec}\right) \quad ;$$

where, $preciseOriginTimeStamp$ is the precise time of the master node, $CorrectionField_{sw(i-1)}$ is the correction time of the previous node, $Pdelay_{swi}$ is the link transmission delay, $RateRatio_{swi}$ is the frequency deviation ratio of the current node, and $t$ is time of the current node.

In the above equation, $CorrectionField_{sw1} = CorrectionField_g +_{del} CorrectionField_{sw1}$,

$$_{del}CorrectionField_{sw1} = \left(t_{2,sync,send} - t_{2,sync,rec}\right) * rateRatio_{sw1}$$
$$+ \frac{neighborPropDelay_{sw1}}{neighborRateRatio_{sw1}} * rateRatio_{sw1} \quad ,$$

$$neighborRateRatio_{sw1} = \left(\left(t_{1,resp,send}\right)_n - \left(t_{1,resp,send}\right)_{n-1}\right) \Big/ \left(\left(t_{2,resp,rec}\right)_n - \left(t_{2,resp,rec}\right)_{n-1}\right) \quad ,$$

$$neighborPropDelay_{sw1} = [neighborRateRatio_{sw1} * \left(t_{2,resp,rec} - t_{2,req,send}\right)$$
$$- \left(t_{1,req,rec} - t_{1,resp,send}\right)] / 2 \quad ,$$

$$Pdelay_{sw1} = neighborPropDelay_{sw1} * rateRatio_g \quad ,$$

$$RateRatio_{sw1} = rateRatio_g + neighborRateRatio_{sw1} - 1 \quad .$$

The synchronous time of the current node may be calculated based on the above equation. It may be understood that, the above equation is illustrated by taking a slave node 1 in FIG. 1 for example. When the synchronous time of the secondary slave node is calculated, the current slave node may be taken as the master node. For example, when the synchronous time of a slave node 2 is calculated, the slave node 1 may be taken as the master node.

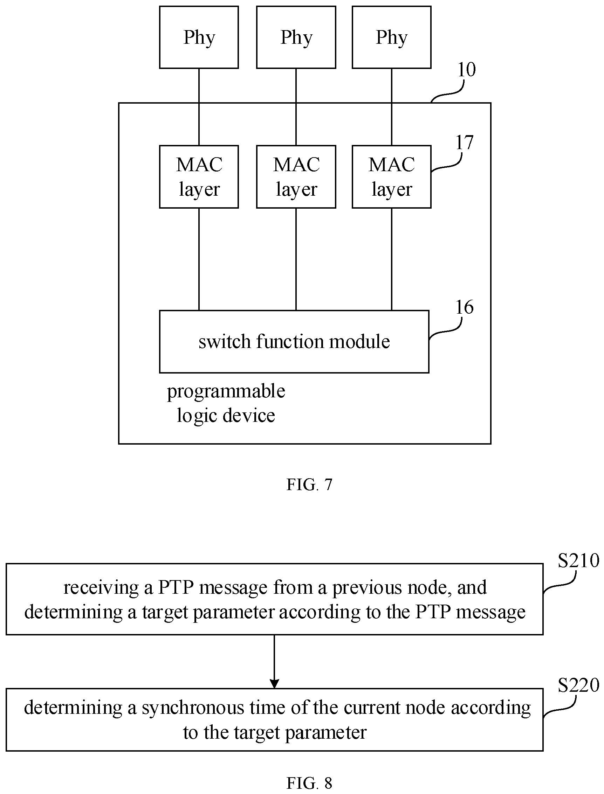

According to some embodiments, the PLD implements a design of a switch. As shown in FIG. 7, the PLD may further include a switch function module 15. The Ethernet control module 10, the message receiving-processing module 11, the synchronous time determining module 12, and the message sending-processing module 13 in the above embodiments are applicable to a MAC layer 16.

According to some embodiments, the Ethernet control module, the message receiving-processing module, and the synchronous time determining module work in parallel. In this way, reception of the PTP message, parsing of the PTP message, and calculation of the synchronous time may be performed in parallel, which greatly enhances a computing speed and stability of a computing process.

In the apparatus for time synchronization according to embodiments of the disclosure, the PTP message from the previous node is received, the target parameter is determined according to the PTP message, and the synchronous time of the current node is determined according to the target parameter. All are implemented by adopting hardware function modules at the PLD side, that is, an entire process of time synchronization adopts "hard implementation", which reduces the startup time of the Linux™ system or the Standalone™ system, so that the startup time of the entire system is reduced, the participation of the ARM platform™ is avoided, and the implementation cost of the entire system is reduced. At the same time, the event message may be sent strictly according to a clock cycle of the PLD itself, so as to ensure the determinacy of the transmission time of the event message and avoid the jitter in the transmission of the event message.

A system for time synchronization is provided according to embodiments of the disclosure, and includes a master node, at least one slave node, and the apparatus for time synchronization according to any one of embodiments of the disclosure. The apparatus for time synchronization is configured in the slave node.

The system for time synchronization according to embodiments of the disclosure includes the apparatus for time synchronization according to any one of embodiments of the disclosure, and has same functions and beneficial effects.

A method for time synchronization is provided according to embodiments of the disclosure, and is performed by the apparatus for time synchronization according to any one of embodiments of the disclosure. As shown in FIG. 8, the method includes following steps.

At S210, a PTP message from a previous node is received, and a target parameter is determined according to the PTP message.

According to some embodiments, determining the target parameter according to the PTP message includes: receiving the PTP message from the previous node and performing a clock domain conversion on the PTP message; obtaining a key parameter of the PTP message by parsing the PTP message after the clock domain conversion, in which the key parameter of the PTP message is a time parameter carried by the PTP message; and determining the target parameter according to the key parameter of the PTP message.

In detail, obtaining the key parameter of the PTP message by parsing the PTP message after the clock domain conversion includes: obtaining a PTP message descriptor; determining a message type according to the PTP message descriptor; and extracting the key parameter of the PTP message corresponding to the message type from the PTP message.

According to some embodiments, determining the target parameter according to the key parameter of the PTP message specifically includes: extracting a target timestamp related to the target parameter from the key parameter of the PTP message; and determining the target parameter according to the target timestamp.

According to some embodiments, the key parameter of the PTP message includes a synchronization message sending timestamp, a synchronization message receiving timestamp, a synchronization follow-up message time parameter, a point delay request message sending timestamp, a point delay request message receiving timestamp, a point delay response message sending timestamp, and a point delay response message receiving timestamp. The target parameter includes a point delay request sending time of the current node, a point delay request receiving time of the previous node, a point delay response sending time of the previous node, and a point delay response receiving time of the current node.

At S220, a synchronous time of the current node is determined according to the target parameter.

According to some embodiments, determining the synchronous time of the current node according to the target parameter includes: determining a correction time of the previous node according to the target parameter, a preset correction time, and a preset frequency deviation ratio, in which the correction time of the previous node is a duration of transmission and residence in a network link from after a synchronization message is sent by the master node to before the synchronization message is forwarded by the previous node; determining a link transmission delay between the previous node and the current node and a frequency deviation ratio of the current node according to the target parameter and the preset frequency deviation ratio, in which the frequency deviation ratio of the current node is a ratio of a clock frequency of the current node to a clock frequency of the master node; and determining the synchronous time according to a precise time of the master node, the correction time of the previous node, the link transmission delay, and the frequency deviation ratio of the current node.

The method for time synchronization according to embodiments of the disclosure and the apparatus for time synchronization according to embodiments of the disclosure belong to a general invention conception, and content not described in method embodiments for time synchronization may refer to apparatus embodiments for time synchronization, which will not be repeated herein.

An electronic device is further provided according to embodiments of the disclosure. The electronic device includes at least one processor; and a memory communicatively connected to the at least one processor; the memory is configured to store instructions executable by at least one processor, and when the instructions are executed by least one processor, at least one processor is caused to perform the method for time synchronization according to the above any one embodiment.

A non-transitory computer-readable storage medium stored with computer instructions is provided according to embodiments of the disclosure. The computer instructions are configured to cause a computer to perform the method for time synchronization according to any one of the above embodiments.

A computer program product including a computer program is provided according to embodiments of the disclosure. The computer program is configured to perform the method for time synchronization according to any one of the above embodiments when performed by a processor.

A computer program including a computer program code is provided according to embodiments of the disclosure.

When the computer program code is running on a computer, the computer is caused to perform the method for time synchronization according to any one of the above embodiments.

It needs to be noted that, the foregoing explanation of apparatus embodiments and method embodiments for time synchronization is applicable to the electronic device, the computer-readable storage medium, the computer program product, and the computer program according to the above embodiments, which will not be repeated herein.

It needs to be noted that, the terms "comprise", "include", or any other variations thereof, are intended to cover a non-exclusive inclusion, such that a process, a method, an article, or a device including a series of elements not only includes those elements but also includes other elements not expressly listed, or may further include elements inherent to such process, method, article, or device. In the absence of more constraints, the elements defined by a sentence "comprising one" do not preclude the presence of additional same elements in the process, method, article, or apparatus that includes the elements.

The foregoing is merely specific embodiments of the disclosure, so that those skilled in the art may understand or implement the disclosure. Various modifications to the embodiments will be apparent to those skilled in the art, and general principles defined herein may be implemented in other embodiments without departing from the spirit or scope of the disclosure. Therefore, the disclosure may not be limited to the embodiments described herein, but conform to the widest scope consistent with principles and novel features disclosed herein.

All embodiments of the disclosure may be executed separately or in combination with other embodiments, and are deemed within a protection scope of the disclosure.

**Claims**

1. An apparatus for time synchronization, configured in a current node, comprising a message receiving-processing module and a synchronous time determining module, wherein an output end of the message receiving-processing module is connected to an input end of the synchronous time determining module;

   wherein the message receiving-processing module is configured to receive a precision time protocol (PTP) message from a previous node and determine a target parameter according to the PTP message, and the target parameter is a relevant time parameter for representing a time difference between the current node and a master node; and
   the synchronous time determining module is configured to determine a synchronous time of the current node according to the target parameter.

2. The apparatus according to claim 1, wherein the message receiving-processing module comprises a message preprocessing unit, wherein the message preprocessing unit is configured to receive the PTP message from the previous node and perform a clock domain conversion on the PTP message.

3. The apparatus according to claim 1 or 2, wherein the message receiving-processing module further comprises a message parsing unit, wherein an input end of the message parsing unit is connected to an output end of the message preprocessing unit; and
   the message parsing unit is configured to obtain a key parameter of the PTP message by parsing the PTP message after the clock domain conversion, wherein the key parameter of the PTP message is a time parameter carried by the PTP message.

4. The apparatus according to claim 3, wherein the message parsing unit is configured to obtain the key parameter of the PTP message by parsing the PTP message after the clock domain conversion, by performing:

   obtaining a PTP message descriptor;
   determining a message type according to the PTP message descriptor; and
   extracting the key parameter of the PTP message corresponding to the message type from the PTP message.

5. The apparatus according to claim 3 or 4, wherein the message receiving-processing module further comprises a target parameter determining unit, wherein an input end of the target parameter determining unit is connected to an output end of the message parsing unit; and
   the target parameter determining unit is configured to determine the target parameter according to the key parameter of the PTP message.

6. The apparatus according to claim 5, wherein the target parameter determining unit is configured to:

extract a target timestamp related to the target parameter from the key parameter of the PTP message; and determine the target parameter according to the target timestamp.

7. The apparatus according to any one of claims 3 to 6, wherein the key parameter of the PTP message comprises a synchronization message sending timestamp, a synchronization message receiving timestamp, a synchronization follow-up message time parameter, a point delay request message sending timestamp, a point delay request message receiving timestamp, a point delay response message sending timestamp, and a point delay response message receiving timestamp; and the target parameter comprises a point delay request sending time of the current node, a point delay request receiving time of the previous node, a point delay response sending time of the previous node, and a point delay response receiving time of the current node.

8. The apparatus according to any one of claims 1 to 7, wherein the synchronous time determining module is configured to:

determine a correction time of the previous node according to the target parameter, a preset correction time, and a preset frequency deviation ratio, wherein the correction time of the previous node is a duration of transmission and residence in a network link when a synchronization message is sent by the master node and is forwarded by the previous node;
determine a link transmission delay between the previous node and the current node and a frequency deviation ratio of the current node according to the target parameter and the preset frequency deviation ratio, wherein the frequency deviation ratio of the current node is a ratio between a clock frequency of the current node and a clock frequency of the master node; and
determine the synchronous time according to a precise time of the master node, the correction time of the previous node, the link transmission delay, and the frequency deviation ratio of the current node.

9. The apparatus according to any one of claims 1 to 8, wherein the apparatus for time synchronization is configured by a programmable logic device (PLD).

10. A system for time synchronization, comprising a master node and at least one slave node, wherein the apparatus for time synchronization according to any one of claims 1 to 9 is configured in the slave node.

11. A method for time synchronization, performed by the apparatus for time synchronization according to any one of claims 1 to 9, comprising:

receiving a precision time protocol (PTP) message from a previous node and determining a target parameter according to the PTP message, wherein the target parameter is a relevant time parameter for representing a time difference between a current node and a master node; and
determining a synchronous time of the current node according to the target parameter.

12. The method according to claim 11, wherein receiving the PTP message from the previous node and determining the target parameter according to the PTP message comprises:
receiving the PTP message from the previous node and performing a clock domain conversion on the PTP message.

13. The method according to claim 11 or 12, wherein receiving the PTP message from the previous node and determining the target parameter according to the PTP message further comprises:
obtaining a key parameter of the PTP message by parsing the PTP message after the clock domain conversion, wherein the key parameter of the PTP message is a time parameter carried by the PTP message.

14. The method according to claim 13, wherein obtaining the key parameter of the PTP message by parsing the PTP message after the clock domain conversion comprises:

obtaining a PTP message descriptor;
determining a message type according to the PTP message descriptor; and
extracting the key parameter of the PTP message corresponding to the message type from the PTP message.

15. The method according to claim 13 or 14, further comprising:
determining the target parameter according to the key parameter of the PTP message.

**16.** The method according to claim 15, wherein determining the target parameter according to the key parameter of the PTP message comprises:

extracting a target timestamp related to the target parameter from the key parameter of the PTP message; and determining the target parameter according to the target timestamp.

**17.** The method according to any one of claims 13 to 16, wherein the key parameter of the PTP message comprises a synchronization message sending timestamp, a synchronization message receiving timestamp, a synchronization follow-up message time parameter, a point delay request message sending timestamp, a point delay request message receiving timestamp, a point delay response message sending timestamp, and a point delay response message receiving timestamp; and the target parameter comprises a point delay request sending time of the current node, a point delay request receiving time of the previous node, a point delay response sending time of the previous node, and a point delay response receiving time of the current node.

**18.** The method according to any one of claims 11 to 17, wherein determining the synchronous time of the current node according to the target parameter comprises:

determining a correction time of the previous node according to the target parameter, a preset correction time, and a preset frequency deviation ratio, wherein the correction time of the previous node is a duration of transmission and residence in a network link when a synchronization message is sent by the master node and is forwarded by the previous node;

determining a link transmission delay between the previous node and the current node and a frequency deviation ratio of the current node according to the target parameter and the preset frequency deviation ratio, wherein the frequency deviation ratio of the current node is a ratio between a clock frequency of the current node and a clock frequency of the master node; and

determining the synchronous time according to a precise time of the master node, the correction time of the previous node, the link transmission delay, and the frequency deviation ratio of the current node.

**19.** An electronic device, comprising:

at least one processor; and
a memory communicatively connected to the at least one processor; wherein
the memory is configured to store instructions executable by the at least one processor, and when the instructions are executed by the at least one processor, the at least one processor is caused to perform the method for time synchronization according to any one of claims 11 to 18.

**20.** A non-transitory computer-readable storage medium stored with computer instructions, wherein the computer instructions are configured to cause a computer to perform the method for time synchronization according to any one of claims 11 to 18.

**21.** A computer program product comprising a computer program, wherein the computer program is configured to perform the method for time synchronization according to any one of claims 11 to 18 when executed by a processor.

**22.** A computer program comprising a computer program code, wherein when the computer program code is running on a computer, the computer is caused to perform the method according to any one of claims 11 to 18.

message receiving-processing module — 11

synchronous time determining module — 12

programmable logic device

FIG. 1

10

Ethernet control module — 11

message preprocessing unit — 123

— 12

message parsing unit — 121

time parameter computing unit — 122

message sending-processing module — 14

synchronous time determining module — 13

real-time clock — 15

programmable logic device

FIG. 2

FIG. 3

FIG. 4

usr_clk →

pkg_flag[4:0] →

sync_origin_ts_s →

sync_origin_ts_ns →

sync_receice_ts →

follup_correct_ns →

follup_correct_sub_ns →

follup_precise_orints_s →

follup_precise_orints_ns →

follup_rateratio →

pdelresp_req_rec_ts_s →

pdelresp_req_rec_ts_ns →

pdelresp_receive_ts →

pdelresp_follup_req_rec_ts_s →

pdelresp_follup_req_rec_ts_ns →

RX_TSU

→ ts_ready_flag

→ $t_{2,req,send}$

→ $t_{1,req,rec}$

→ $t_{2,resp,rec}$

→ $t_{1,resp,send}$

FIG. 5

master node     slave node 1     slave node 2

master port   slave port   master port   slave port   master port

$t_{2,req,send}$

Pdelay_Req

$t_{1,req,rec}$

$t_{3,req,send}$

Pdelay_Req

$t_{2,req,rec}$

$t_{1,resp,send}$

Pdelay_Resp $(t_{1,req,rec})$

$t_{2,resp,send}$

$t_{2,resp,rec}$

Pdelay_Resp $(t_{2,req,rec})$

Pdelay_Resp_Follow_Up $(t_{1,resp,send})$

$t_{3,resp,rec}$

Pdelay_Resp_Follow_Up $(t_{2,resp,send})$

$t_{1,sync,send}$

Sync

$t_{2,sync,send}$

$t_{2,sync,rec}$

Sync

Follow_Up $(preciseOriginTimeStamp,$

$t_{3,sync,rec}$

CorrectionField$_g$, rateRatio$_g$)

Follow_Up $(preciseOriginTimeStamp,$

CorrectionField$_{sw1}$, rateRatio$_{sw1}$)

FIG. 6

EP 4 407 900 A1

16

Phy    Phy    Phy

10

MAC
layer    MAC
layer    MAC
layer    17

switch function module    16

programmable
logic device

FIG. 7

receiving a PTP message from a previous node, and
determining a target parameter according to the PTP message    S210

determining a synchronous time of the current node according
to the target parameter    S220

FIG. 8

## INTERNATIONAL SEARCH REPORT

| International application No. |
| --- |
| **PCT/CN2022/119691** |

| A. | CLASSIFICATION OF SUBJECT MATTER |
| --- | --- |
| | H04J 3/06(2006.01)i |

According to International Patent Classification (IPC) or to both national classification and IPC

| B. | FIELDS SEARCHED |
| --- | --- |

Minimum documentation searched (classification system followed by classification symbols)

H04J

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; JPTXT: 时间, 时钟, 同步, PTP报文, Time, Clock, Synchronization, PTP, Message

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 103067112 A (FUJIAN STAR-NET RUIJIE NETWORK CO., LTD.) 24 April 2013 (2013-04-24) <br> claims 1-18, description paragraphs [0026]-[0036] and [0101], and figures 1-4 | 1-22 |
| X | CN 102104476 A (ZTE CORP.) 22 June 2011 (2011-06-22) <br> claims 1-10, and figures 1-9 | 1-22 |
| A | CN 113411153 A (NATIONAL UNIVERSITY OF DEFENSE TECHNOLOGY OF PLA) 17 September 2021 (2021-09-17) <br> entire document | 1-22 |
| A | US 2013170507 A1 (HSUEH, C. et al.) 04 July 2013 (2013-07-04) <br> entire document | 1-22 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 November 2022** | **05 December 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/119691**

| Patent document cited in search report | | | Publication date (day/month/year) | Patent family member(s) | | | Publication date (day/month/year) |
|---|---|---|---|---|---|---|---|
| CN | 103067112 | A | 24 April 2013 | CN | 103067112 | B | 27 January 2016 |
| CN | 102104476 | A | 22 June 2011 | CN | 102104476 | B | 28 January 2015 |
| CN | 113411153 | A | 17 September 2021 | CN | 113411153 | B | 26 July 2022 |
| US | 2013170507 | A1 | 04 July 2013 | US | 2016191184 | A1 | 30 June 2016 |
| | | | | US | 9106353 | B2 | 11 August 2015 |
| | | | | US | 9882666 | B2 | 30 January 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111115390